# FASCICULE DE BREVET EUROPEEN

(11) **EP 0 690 892 B1**
(45) Date de publication et mention de la délivrance du brevet: **21.05.1997**
(21) Numéro de dépôt: 94911210.6
(22) Date de dépôt: 24.03.1994
(51) Int. Cl.: C08L 95/00, C09D 195/00, C08K 5/09, C08K 5/42, C08K 5/521, C08K 5/523

(54) **COMPOSITIONS BITUME/POLYMERE NON GELIFIABLES**
UNGELLIERBARE BITUMEN/POLYMER ZUSAMMENSETZUNGEN
NON-GELLABLE BITUMEN/POLYMER COMPOSITIONS

(30) Priorité: 26.03.1993 FR 9303492
(43) Date de publication de la demande: 10.01.1996
(73) Titulaire: ELF ANTAR FRANCE, 92400 Courbevoie (FR)
(72) Inventeur: GERMANAUD, Laurent, F-38540 Heyrieux (FR); PLANCHE, Jean-Pascal, F-69360 Serezin-du-Rhône (FR); PHUNG, Trung, Kiet, F-69008 Lyon (FR)
(74) Mandataire: Boillot, Marc
(86) Numéro de dépôt international: FR9400323
(87) Numéro de publication internationale: WO9422958

(56) Documents cités:
- EP-A- 0 157 210
- EP-A- 0 227 238
- EP-A- 0 299 820
- EP-A- 0 360 656
- FR-A- 860 763
- US-A- 1 969 904
- US-A- 2 693 425
- DATABASE WPI Week 7501, 12 Juin 1974 Derwent Publications Ltd., London, GB; AN 75-00477W 'Vulcanizing rubber asphalt - comprising extd.oil-extended rubber, and vulcanization catalysts mixed with sulphur.' & JP,A,49 060 322 (SUZUKI K.) 12 Juin 1974
- DATABASE WPI Week 7501, 12 Juin 1974 Derwent Publications Ltd., London, GB; AN 75-00477W 'Vulcanizing rubber asphalt - comprising extd.oil-extended rubber, and vulcanization catalysts mixed with sulphur.' & JP,A,49 060 322

## Description

L'invention a trait à des compositions bitume/polymère non gélifiables et stables au stockage à température élevée, c'est-à-dire selon l'invention jusqu'à des températures pouvant atteindre des valeurs de l'ordre de 260°C. Elle se rapporte encore à un procédé de préparation de telles compositions et concerne également l'application de ces compositions à la production de liants bitume/polymère utilisables pour la réalisation de revêtements et notamment de revêtements routiers.

La réticulation, par le soufre, d'élastomères portant des insaturations, notamment de copolymères de styrène et d'un diène conjugué tel que butadiène ou isoprène, au sein de bitumes conduit à des compositions bitume/polymère, qui possèdent une stabilité améliorée et d'excellentes caractéristiques physicomécaniques et qui sont utilisables pour la réalisation de revêtements divers, notamment revêtements superficiels routiers, enrobés ou encore revêtements d'étanchéité, présentant des caractéristiques améliorées par rapport aux revêtements obtenus à partir de bitumes seuls.

La préparation de compositions bitume/polymère du type précité, pour lesquelles l'élastomère réticulable au soufre est un copolymère de styrène et d'un diène conjugué, est décrite, notamment, dans les citations FR-A-2376188, FR-A-2528439, EP-A-0360656 et EP-A- 0299820.

Les compositions bitume/polymère du type précité, à partir desquelles on produit des liants bitume/polymère pour la réalisation de revêtements, notamment revêtements routiers, sont préparées dans la pratique à des teneurs en polymère inférieures à un seuil, qui peut varier d'environ 3 % à 6 % en poids du bitume selon la nature et la masse moléculaire du polymère, d'une part, et la qualité du bitume, d'autre part, ceci pour éviter une gélification de la composition bitume/polymère, que l'on observe assez fréquemment, lors de la préparation de ladite composition ou au cours de son stockage, dès que la teneur en polymère de cette composition dépasse le seuil précité. Il est donc difficile, dans la pratique, de produire des compositions bitume/polymère non gélifiables à teneur élevée en polymère, qui joueraient le rôle de concentrés bitume/polymère, plus économiques à préparer et à transporter que les compositions bitume/polymère à teneur plus faible en polymère, et qui pourraient être diluées au moment de l'utilisation, par addition de bitume, pour obtenir les liants bitume/polymère correspondants à teneur plus faible en polymère qui sont utilisés habituellement pour la réalisation de revêtements.

L'invention permet de remédier aux inconvénients précités en proposant des compositions bitume/polymère du type comportant un bitume et un élastomère réticulé au soufre, qui sont non gélifiables, stables au stockage à température élevée, c'est-à-dire selon l'invention jusqu'à des températures de l'ordre de 260°C, et pompables au moyen des systèmes conventionnels de pompage des bitumes fondus et qui peuvent être facilement diluées, si besoin est, par du bitume, pour produire les liants bitume/polymère utilisés habituellement pour la réalisation de revêtements et notamment de revêtements routiers.

Les compositions bitume/polymère selon l'invention sont du type consistant en une masse homogène formée d'une matrice bitumineuse constituée d'un bitume ou d'un mélange de bitumes et dans laquelle est distribué, de manière uniforme, un élastomère réticulé au soufre, en quantité comprise entre 3 % et 30 % et de préférence entre 5 % et 25 % du poids de la matrice bitumineuse, et elles se caractérisent en ce qu'un adjuvant, jouant notamment le rôle d'antigélifiant, est également présent dans la matrice bitumineuse en quantité comprise entre 0,1 % et 5 % et de préférence entre 0,2 % et 3 % du poids de ladite matrice, ledit adjuvant consistant en un ou plusieurs composés de formule R-X, dans laquelle R est un radical organique monovalent en C₂ à C₅₀ et plus spécialement en C₂ à C₄₀ et X désigne un groupement fonctionnel choisi parmi 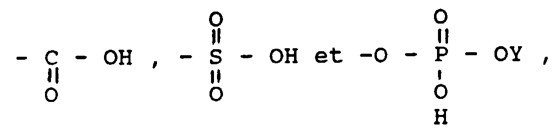 Y représentant un atome d'hydrogène ou un radical R.

Un procédé pour la préparation des compositions bitume/polymère selon l'invention est du type dans lequel on met en contact, en opérant à des températures comprises entre 100°C et 230°C et sous agitation pendant une durée d'au moins 10 minutes, le bitume ou le mélange de bitumes choisi pour constituer la matrice bitumineuse, avec, comptés en poids de la matrice bitumineuse, entre 3 % et 30 % et de préférence 5 % et 25 % d'un élastomère réticulable au soufre et un agent de couplage donneur de soufre en quantité propre à fournir une quantité de soufre libre représentant 0,1 % à 20 % et de préférence 0,5 % à 10 % du poids du polymère réticulable au soufre dans le milieu réactionnel formé des ingrédients matrice bitumineuse, élastomère et agent de couplage, et il se caractérise en ce que, lors de ladite mise en contact, le milieu réactionnel renferme un adjuvant, jouant notamment le rôle d'antigélifiant, ledit adjuvant étant utilisé en quantité comprise entre 0,1 % et 5 % et de préférence entre 0,2 % et 3 % du poids de la matrice bitumineuse et étant constitué d'un ou plusieurs composés de formule R - X, dans laquelle R est un radical organique monovalent en C₂ à C₅₀ et plus particulièrement en C₂ à C₄₀ et X désigne un groupement fonctionnel choisi parmi 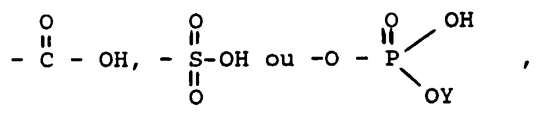 Y représentant un atome d'hydrogène ou radical R.

Le bitume ou mélange de bitumes, que l'on met en contact avec l'élastomère réticulable au soufre, l'adjuvant antigélifiant et l'agent de couplage donneur de soufre et qui constitue la matrice bitumineuse de la composition bitume/polymère, est choisi avantageusement parmi les divers bitumes qui possèdent une viscosité cinématique à 100°C comprise entre 0,5 x 10⁻⁴ m²/s et 3 x 10⁻² m²/s et de préférence entre 1 x 10⁻⁴ m²/s et 2 x 10⁻² m²/s. Ces bitumes peuvent être des bitumes de distillation directe ou de distillation sous pression réduite ou encore des bitumes soufflés ou semi-soufflés, voire même certaines coupes pétrolières ou des mélanges de bitumes et de distillats sous vide. Avantageusement, le bitume ou mélange de bitumes utilisé pour l'obtention des compositions selon l'invention, outre une viscosité cinématique comprise dans les intervalles précités, présente une pénétrabilité, définie suivant la norme NF T 66004, comprise entre 5 et 500 et de préférence entre 20 et 400.

L'élastomère réticulable au soufre, que l'on utilise pour préparer les compositions bitume/polymère et que l'on retrouve réticulé dans lesdites compositions, peut être tel que polyisoprène, polynorbornène, polybutadiène, caoutchouc butyle, terpolymère éthylène/propylène/diène (EPDM). Avantageusement, ledit élastomère est choisi parmi les copolymères statistiques ou séquencés de styrène et d'un diène conjugué tel que butadiène, isoprène, chloroprène, butadiène carboxylé, isoprène carboxylé, et plus particulièrement consiste en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé. Le copolymère de styrène et de diène conjugué, et en particulier chacun des copolymères précités, possède avantageusement une teneur pondérale en styrène allant de 5 % à 50 %. La masse moléculaire viscosimétrique moyenne du copolymère de styrène et de diène conjugué, et notamment celle des copolymères mentionnés ci-dessus, peut être comprise, par exemple, entre 10 000 et 600 000 et se situe de préférence entre 30000 et 400000. De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires viscosimétriques situées dans les intervalles définis précédemment.

Dans l'adjuvant de formule R-X défini précédemment, le symbole R représente avantageusement un radical monovalent hydrocarboné saturé ou insaturé en C₂ à C₅₀ et plus spécialement en C₂ à C₄₀, ledit radical étant en particulier du type alkyle ou alkényle linéaire ou ramifié, par exemple nonyle, dodécyle, tétradécyle, hexadécyle, octadécyle, octadécényle, nonadécyle, eicosényle, docosényle, tétracosényle, du type alkylaryle, par exemple nonylphényle, dodécylphényle, didodécylphényle, tétradécylphényle, dodécyltolyle, nonyltolyle, nonylxylyle, dodécylxylyle, dodécylcuményle, hexadécylphényle, du type alkadiényle ou alkatriényle, par exemple décadiényl-2,4, décatriényl-2,4,6, octadécadiényl-9,10, octadécatriényl-9,12,15, ou encore du type polycyclique à cycles condensés, par exemple reste hydrocarboné obtenu par élimination du groupement carboxylique dans un composé tel que l'acide abiétique ou un acide résinique dérivant de l'acide abiétique. Des exemples non limitatifs d'adjuvants antigélifiants de formule R-X comprennent les acides carboxyliques à chaîne grasse saturée ou insaturée tels que l'acide pélargonique, l'acide laurique, l'acide palmitique, l'acide stéarique, l'acide myristique, l'acide béhénique, l'acide oléique, l'acide érucique, l'acide linoléique, l'acide linolénique, les acides alkylarènesulfoniques portant une ou deux chaînes grasses saturées ou insaturées sur le noyau tels que l'acide nonylbenzènesulfonique, l'acide dodécylbenzène sulfonique, l'acide didodécylbenzène sulfonique, l'acide nonyltoluène sulfonique, l'acide nonylxylènesulfonique, l'acide dodécyltoluènesulfonique, l'acide hexadécylbenzènesulfonique, les acides polycycliques à cycles condensés tels que l'acide abiétique et les acides résiniques dérivés de l'acide abiétique, les monohydrocarbylesters et dihydrocarbylesters de l'acide phosphorique encore appelés acides monohydrocarbylphosphoriques et acides dihydrocarbylphosphoriques pour lesquels le radical hydrocarbyle est choisi parmi les radicaux alkyles tels que butyle, éthyle, éthyl-2 hexyle, octyle, nonyle, décyle, dodécyle, hexadécyle, octadécényle-9, octadécyle, les mélanges d'acides carboxyliques à chaîne grasse et les mélanges d'acides résiniques et d'acides carboxyliques à chaîne grasse.

L'agent de couplage donneur de soufre, que l'on utilise dans la préparation des compositions bitume/polymère selon l'invention, peut consister en un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre. En particulier, l'agent de couplage donneur de soufre est choisi parmi les produits M, qui renferment, en poids, de 0 % à 100 % d'une composante A consistant en un ou plusieurs accélérateurs de vulcanisation donneurs de soufre et de 100 % à 0 % d'une composante B consistant en un ou plusieurs agents de vulcanisation choisis parmi le soufre élémentaire et les polysulfures d'hydrocarbyle, et les produits N, qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 0,5.

Le soufre élémentaire susceptible d'être utilisé pour constituer, en partie ou en totalité, l'agent de couplage est avantageusement du soufre en fleur et de préférence du soufre cristallisé sous la forme orthorhombique et connu sous le nom de soufre alpha.

Les polysulfures d'hydrocarbyle susceptibles d'être employés pour former une partie ou la totalité de l'agent de couplage peuvent être choisis parmi ceux qui sont définis dans la citation FR-A-2528439 et qui répondent à la formule générale 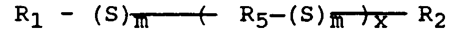 dans laquelle R₁ et R₂ désignent chacun un radical hydrocarboné monovalent, saturé ou insaturé, en C₁ à C₂₀ ou sont reliés entre eux pour constituer un radical hydrocarboné divalent en C₁ à C₂₀, saturé ou insaturé, formant un cycle avec les autres groupements d'atomes associés dans la formule, R₅ est un radical hydrocarboné divalent, saturé ou insaturé, en C₁ à C₂₀, les - (S)m - représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2 et x représente un nombre entier prenant les valeurs de zéro à 10. Des polysulfures préférés répondent à la formule R₃ - (S)p - R₃, dans laquelle R₃ désigne un radical alkyle en C₆ à C₁₆, par exemple hexyle, octyle, dodécyle, tertiododécyle, hexadécyle, nonyle, décyle, et -(S)p- représente un groupement divalent formé par un enchaînement de p atomes de soufre, p étant un nombre entier allant de 2 à 5.

Lorsque l'agent de couplage renferme un accélérateur de vulcanisation donneur de soufre, ce dernier peut être choisi, en particulier, parmi les polysulfures de thiurame de formule 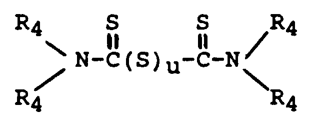 dans laquelle les R₄, identiques ou différents, représentent chacun un radical hydrocarboné en C₁ à C₁₂ et de préférence en C₁ à C₈, notamment radical alkyle, cycloalkyle ou aryle, ou bien deux radicaux R₄ fixés à un même atome d'azote sont reliés entre eux pour former un radical divalent hydrocarboné en C₂ à C₈ et u est un nombre allant de 2 à 8. Comme exemples de tels accélérateurs de vulcanisation on peut citer notamment les composés disulfure de dipentaméthylène thiurame, tétrasulfure de dipentaméthylène thiurame, hexasulfure de dipentaméthylènethiurame, disulfure de tétrabutylthiurame, disulfure de tétraéthylthiurame et disulfure de tétraméthylthiurame.

Comme autres exemples d'accélérateurs de vulcanisation donneurs de soufre, on peut encore citer les disulfures d'alkylphénols et les disulfures tels que disulfure de morpholine et N,N'-disulfure de caprolactame.

Les accélérateurs de vulcanisation non donneurs de soufre utilisables pour former la composante C des agents de couplage de type produit N peuvent être des composés soufrés choisis notamment parmi le mercaptobenzothiazole et ses dérivés, notamment benzothiazole thiolates métalliques et surtout benzothiazolesulfénamides, les dithiocarbamates de formule 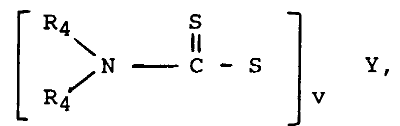 dans laquelle les R4, identiques ou différents, ont la signification donnée plus haut, Y représente un métal et v désigne la valence de Y, et les monosulfures de thiurame de formule 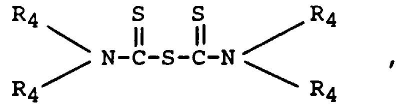 dans laquelle les R₄ ont la signification donnée plus haut.

Des exemples d'accélérateurs de vulcanisation du type des mercaptobenzothiazoles peuvent être tels que mercaptobenzothiazole, benzothiazole thiolate d'un métal tel que zinc, sodium, cuivre, disulfure de benzothiazyle, 2-benzothiazolepentaméthylènesulfénamide, 2-benzothiazolethiosulfénamide, 2-benzothiazoledihydrocarbylsulfénamides pour lesquelles le radical hydrocarbyle est un radical éthyle, isopropyle, tertiobutyle, cyclohexyle, et N-oxydiéthylène 2-benzothiazolesulfénamide.

Parmi les accélérateurs de vulcanisation du type des dithiocarbamates de formule précitée, on peut citer les composés diméthyldithiocarbamates de métaux tels que cuivre, zinc, plomb, bismuth et sélénium, diéthyldithiocarbamates de métaux tels que cadmium et zinc, diamyldithiocarbamates de métaux tels que cadmium, zinc et plomb et pentaméthylènedithiocarbamate de plomb ou zinc.

A titre d'exemples de monosulfures de thiurame ayant la formule donnée plus haut, on peut citer les composés tels que monosulfure de dipentaméthylènethiurame, monosulfure de tétraméthylthiurame, monosulfure de tétraéthylthiurame et monosulfure de tétrabutylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1,3 guanidine, diorthotolylguanidine et oxyde de zinc.

Pour plus de détails sur les accélérateurs de vulcanisation donneurs de soufre et non donneurs de soufre utilisables dans la constitution de l'agent de couplage, on peut se référer aux citations EP-A-0360656 et EP-A-0409683, dont le contenu est incorporé à la présente description par référence, de même que le contenu de la citation FR-A-2528439.

De par sa composition, comme indiqué plus haut, l'agent de couplage peut être du type monocomposante ou du type multicomposante, l'agent de couplage du type multicomposante pouvant être formé préalablement à son utilisation ou encore produit in situ dans le milieu dans lequel il doit être présent. L'agent de couplage du type multicomposante préformé ou du type monocomposante ou les composantes de l'agent de couplage du type multicomposante formé in situ peuvent être mis en oeuvre tels quels, par exemple à l'état fondu, ou bien en mélange, par exemple en solution ou en suspension, avec un diluant, par exemple un composé hydrocarboné.

Le procédé de préparation des compositions bitume/polymère selon l'invention est avantageusement mis en oeuvre en mettant tout d'abord en contact l'élastomère réticulable au soufre et l'adjuvant de formule R-X avec le bitume ou le mélange de bitumes destiné à former la matrice bitumineuse des compositions, en utilisant des proportions d'élastomère et d'adjuvant ayant des valeurs, par rapport à la matrice bitumineuse, choisies dans les intervalles définis précédemment pour ces proportions, en opérant à des températures comprises entre 100°C et 230°C, plus particulièrement entre 120°C et 190°C, et sous agitation, pendant une durée suffisante, généralement de l'ordre de quelques dizaines de minutes à quelques heures et par exemple de l'ordre de 1 heure à 8 heures, pour former un mélange homogène, puis en incorporant audit mélange l'agent de couplage donneur de soufre en quantité appropriée choisie dans les intervalles définis précédemment pour ladite quantité et en maintenant le tout sous agitation à des températures comprises entre 100°C et 230°C, plus particulièrement entre 120°C et 190°C, et identiques ou non aux températures de mélange de l'élastomère et de l'adjuvant avec la matrice bitumineuse, pendant une durée au moins égale à 10 minutes et généralement allant de 10 minutes à 5 heures, plus particulièrement de 30 minutes à 180 minutes, pour former un produit de réaction constituant la composition bitume/polymère non gélifiable.

Dans la mise en oeuvre donnée ci-dessus, l'adjuvant peut être incorporé au bitume ou mélanges de bitume avant ou après l'élastomère, une incorporation simultanée pouvant être également envisagée. De préférence, l'adjuvant est incorporé au bitume ou mélange de bitumes avant l'élastomère.

Les compositions bitume/polymère selon l'invention peuvent encore renfermer des additifs divers et notamment des promoteurs d'adhésion du liant bitume/polymère final aux surfaces minérales. Pour ce faire, on peut ajouter lesdits additifs au milieu réactionnel formé du bitume ou mélange de bitumes, de l'élastomère réticulable au soufre, de l'adjuvant de formule R-X et de l'agent de couplage, à un moment quelconque de la constitution dudit milieu réactionnel et de préférence avant l'addition de l'agent de couplage à un milieu constitué des autres ingrédients.

Les compositions bitume/polymère selon l'invention sont non gélifiables et stables au stockage jusqu'à des températures élevées pouvant atteindre des valeurs de l'ordre de 260°C. Elles peuvent être utilisées telles quelles ou bien diluées avec des proportions variables d'un bitume ou d'un mélange de bitumes pour constituer des liants bitume/polymère ayant une teneur choisie en élastomère réticulé, qui peut être soit égale (composition non diluée) ou bien inférieure (composition diluée) à la teneur en élastomère réticulé des compositions bitume/polymère initiales correspondantes. La dilution des compositions bitume/polymère avec le bitume ou mélange de bitumes peut être réalisée soit directement à la suite de l'obtention desdites compositions, lorsqu'une utilisation quasi immédiate des liants bitume/polymère résultants est requise, ou bien encore après une durée de stockage plus ou moins prolongée des compositions bitume/polymère, lorsqu'une utilisation différée des liants bitume/polymère résultants est envisagée. Le bitume ou mélange de bitumes utilisé pour la dilution d'une composition bitume/polymère selon l'invention peut être choisi parmi les bitumes définis précédemment comme convenant à la préparation des compositions bitume/polymère.

La dilution d'une composition bitume/polymère selon l'invention par un bitume ou mélange de bitumes pour former un liant bitume/polymère à teneur choisie en élastomère réticulé, inférieure à celle de la composition bitume/polymère, est généralement réalisée en mettant en contact, sous agitation à des températures comprises entre 100°C et 230°C et plus particulièrement entre 120°C et 190°C, des proportions convenables de la composition bitume/polymère et de bitume ou mélange de bitumes. Par exemple, la quantité de bitume ou mélange de bitumes de dilution peut être choisie pour que le liant bitume/polymère résultant de la dilution de la composition bitume/polymère renferme, en poids de la matrice bitumineuse, entre 0,5 % et 5 % d'élastomère réticulé.

Les liants bitume/polymère consistant en les compositions bitume/polymère selon l'invention ou résultant de la dilution desdites compositions par un bitume ou mélange de bitumes, jusqu'à la teneur désirée en élastomère réticulé dans lesdits liants, sont applicables, directement ou après mise en émulsion aqueuse, à la réalisation de revêtements routiers du type enduits superficiels, à la production d'enrobés mis en place à chaud ou à froid, ou encore à la réalisation de revêtements d'étanchéité.

L'invention est illustrée par les exemples suivants donnés à titre non limitatif.

Dans ces exemples, les quantités et pourcentages sont exprimés en poids sauf indication contraire.

### EXEMPLE 1 :

### Préparation d'une composition bitume/polymère témoin

En opérant à 175°C sous agitation, on mélangeait 1000 parties d'un bitume de distillation directe ayant une pénétrabilité égale à 91, une viscosité cinématique à 100°C de 1,7 x 10⁻⁴ m²/s, un point de ramollissement Bille et Anneau (selon la norme NF T 66 008) égal à 46°C et un point de fragilité Fraass (selon la norme IP 80/53) égal à -18,5°C, avec 64 parties d'un copolymère diséquencé de styrène et de butadiène présentant une masse moléculaire moyenne viscosimétrique égale à environ 75 000 et renfermant 75 % de butadiène. Après 5 heures de mélange sous agitation, on obtenait une masse homogène.

A la masse homogène précitée, maintenue à 175°C, on ajoutait alors 2 parties de soufre cristallisé et on agitait encore l'ensemble pendant 60 minutes environ.

On recueillait alors un produit très visqueux ayant l'aspect d'un gel impossible à manipuler.

### EXEMPLE 2 :

### Préparation d'une composition bitume/polymère selon l'invention

En opérant à 175°C sous agitation, on incorporait 10,76 parties d'acide pélargonique à 1000 parties d'un bitume identique au bitume utilisé dans l'exemple 1 et maintenait le mélange obtenu à ladite température pendant 20 minutes.

En opérant toujours à la température de 175°C, on incorporait ensuite, sous agitation, au mélange de bitume et d'acide pélargonique 64,7 parties d'un copolymère séquencé identique à celui utilisé dans l'exemple 1. Après 5 heures de mélange sous agitation, on obtenait une masse homogène.

A cette masse homogène, maintenue à 175°C, on ajoutait alors 2,15 parties de soufre cristallisé et on agitait encore l'ensemble pendant 60 minutes environ.

On obtenait une composition bitume/polymère non gélifiée (produit II) présentant les valeurs de pénétrabilité et de point de ramollissement Bille et Anneau données dans le tableau I comparativement à celles du bitume pur (produit I.a) et à celles de la composition bitume/polymère témoin de l'exemple 1 (produit I.b).

**TABLEAU I**

| Produit | Teneur en polymère (% poids) | Pénétrabilité (1/10 mm) | Point de ramollissement (°C) |
|---|---|---|---|
| I.a | 0 | 91 | 46 |
| I.b | 6 | GEL | |
| II | 6 | 106 | 87,5 |

Comme le montrent les données du tableau I, l'utilisation d'acide pélargonique (adjuvant antigélifiant selon l'invention) permet la préparation d'une composition bitume/polymère non gélifiée à forte teneur en polymère (6 % en poids) ayant un point de ramollissement Bille et Anneau nettement augmenté. La composition témoin correspondante préparée en l'absence d'acide pélargonique ou autre adjuvant selon l'invention est gélifiée et impossible à manipuler.

### EXEMPLES 3 A 8 :

### Préparation de compositions bitume/polymère selon l'invention en changeant la nature de l'adiuvant antigélifiant

On opérait comme décrit dans l'exemple 2 en changeant toutefois, d'un exemple à l'autre, la nature de l'adjuvant antigélifiant, les autres conditions opératoires étant celles de l'exemple 2.

Nature de l'adjuvant antigélifiant :
. Exemple 3 : acide oléique
. Exemple 4 : acide palmitique
. Exemple 5 : acide abiétique
. Exemple 6 : mélange d'acides gras linéaires en C₁₆ à C₁₈ et d'acides résiniques naturels ayant les caractéristiques suivantes :
   - densité à 20°C : 0,990
   - indice d'acide : 155 mg KOH/g
   - indice de saponification : 160 mg KOH/g
   - acides gras linéaires en C16 à C18 : 40 %
   - acides résiniques : 50 %
   - Insaponifiables : 10 %
. Exemple 7 : mélange d'acides gras naturels linéaires et résiniques ayant les caractéristiques suivantes :
   - densité à 20°C : 0,942
   - indice d'acide : 185 mg KOH/g
   - indice de saponification : 194 mg KOH/g
   - indice d'iode : 125
   - acides gras linéaires en C16 à C18 : 66 %
   - acides résiniques : 30 %
   - insaponifiables : 4 %
. Exemple 8 : résidu de distillation d'un mélange d'acides ayant les caractéristiques suivantes :
   - densité à 20°C : 1,075
   - indice d'acide : 40 mg KOH/g
   - indice de saponification : 90 mg KOH/g
   - acides résiniques : 20 %
   - acides gras linéaires en C16 à C18 : 12 %
   - insaponifiables : 68 %

Les compositions bitume/polymère obtenues sont désignées par "Produit Z.a", Z étant le numéro de l'exemple en chiffres romains.

Chacune des compositions bitume/polymère désignées par "Produit Z.a" a été diluée par un poids équivalent de bitume de départ, en opérant sous agitation à 175°C pendant 60 minutes, pour donner un liant bitume/polymère désigné par "Produit Z.b".

On a rassemblé dans le Tableau II, les valeurs de pénétrabilité et de TBA (point de ramollissement Bille et Anneau) des "Produits Z.a" (compositions bitume/polymère), ainsi que les valeurs de pénétrabilité et de TBA et les caractéristiques rhéologiques en traction (selon la norme NF T 46 002) des "Produits Z.b" (liants bitume/polymère obtenus par dilution des compositions).

**TABLEAU II**

| Produit | Adjuvant | Polymère (% poids) | Pénétrabilité (1/10 mm) | TBA (°C) | Essai de traction | | | | |
|---|---|---|---|---|---|---|---|---|---|
| | | | | | Température (°C) | Vitesse (mm/min) | σs (bars) | σr(bars) | εr (%) |
| III.a | Acide oléique | 6 | 71 | 79 | | | | | |
| III.b | | 3 | 82 | 53 | 20 | 500 | 1,53 | 0,50 | > 900 |
| | | | | | 5 | 500 | 15,3 | 5,26 | 867 |
| IV.a | Acide palmitique | 6 | 67 | 79 | | | | | |
| IV.b | | 3 | 81 | 53 | 20 | 500 | 1,61 | 0,58 | > 900 |
| | | | | | 5 | 500 | 15,6 | 4,87 | > 900 |
| V.a | Acide abiétique | 6 | 58 | 78 | | | | | |
| V.b | | 3 | 64 | 54 | 20 | 500 | 1,85 | 0,64 | > 900 |
| | | | | | 5 | 500 | 17,8 | 5,45 | 810 |
| VI.a | Acides gras | 6 | 64 | 79 | | | | | |
| VI.b | | 3 | 72 | 53 | 20 | 500 | 1,73 | 0,59 | > 900 |
| | | | | | 5 | 500 | 16,5 | 4,77 | > 700 |
| VII.a | Acides gras | 6 | 67 | 79 | | | | | |
| VII.b | | 3 | 72 | 54 | 20 | 500 | 1,83 | 0,60 | > 900 |
| | | | | | 5 | 500 | 17 | 5,14 | > 900 |
| VIII.a | Acides gras | 6 | 59 | 84 | | | | | |
| VIII.b | | 3 | 75 | 54 | 20 | 500 | 1,81 | 0,66 | > 900 |
| | | | | | 5 | 500 | 16,2 | 5,69 | > 900 |
| I.b | Néant | 6 | GEL | | | | | | |
| I.a | Néant | 0 | 91 | 46 | 20 | 500 | 1,2 | 900 | |
| | | | | | 5 | 500 | FRAGILE | | |

| | | | | | | | | | |
|---|---|---|---|---|---|---|---|---|---|
| σs : contrainte au seuil | | | | | | | | | |
| σr : contrainte à la rupture | | | | | | | | | |
| εr : allongement à la rupture | | | | | | | | | |

Au vu des résultats figurant au tableau II, il apparaît encore que l'utilisation d'adjuvants selon l'invention, ici du type acide gras permet la préparation de compositions bitume/polymère non gélifiées à point de ramollissement Bille et Anneau substantiellement amélioré par rapport au bitume pur. Les liants bitume/polymère obtenus par dilution de ces compositions au moyen de bitume ont d'excellentes caractéristiques mécaniques et notamment un excellent allongement à la rupture à basse température.

La composition bitume/polymère témoin (produit I.b), préparée en l'absence d'adjuvant selon l'invention, est gélifiée et impossible à manipuler.

### EXEMPLE 9 :

### Préparation d'une composition bitume/polymère selon l'invention en utilisant un adjuvant du type acide sulfonique

En opérant à 185°C sous agitation, on incorporait 3,3 parties d'un acide didodécylbenzènesulfonique (acide benzène sulfonique portant deux radicaux dodécyle sur le noyau aromatique) à 1000 parties d'un bitume identique au bitume utilisé dans l'exemple 1 et maintenait le tout à ladite température pendant 30 minutes.

En opérant toujours à la même température et sous agitation, on incorporait ensuite au mélange de bitume et d'acide sulfonique 99,5 parties d'un copolymère diséquencé de styrène et de butadiène identique à celui utilisé dans l'exemple 1. Après 5 heures de mélange sous agitation, on obtenait une masse homogène.

A cette masse homogène, maintenue à 185°C, on ajoutait alors 2,8 parties de soufre cristallisé et on agitait encore l'ensemble pendant 60 minutes environ.

On obtenait une composition bitume/polymère non gélifiée (produit IX.a) renfermant environ 9 % en poids de copolymère styrène/butadiène.

Dans le tableau III ci-après, on donne les valeurs de pénétrabilité et de TBA de la composition ainsi obtenue mesurées pendant un stockage de ladite composition à haute température (environ 163°C).

**TABLEAU III**

| Produit | Durée de stockage à 163°C (heures) | Pénétrabilité (1/10 mm) | TBA (°C) |
|---|---|---|---|
| | 0 | 58 | 92,5 |
| | 48 | 60 | 92,5 |
| IX.a | 96 | 59 | 95 |
| | 144 | 60 | 99 |
| | 240 | 58 | 101 |

En effectuant la préparation d'une composition bitume/polymère témoin dans les conditions décrites ci-dessus, mais en l'absence de l'adjuvant acide sulfonique, le milieu réactionnel gélifiait dans le réacteur immédiatement après l'addition du soufre.

A partir de la composition bitume/polymère obtenue ci-dessus (produit IX.a), on préparait un liant bitume/polymère (produit IX.b) à 3 % de copolymère styrène/butadiène. Pour ce faire, on mélangeait 100 parties de ladite composition, prélevées 120 minutes après l'introduction du soufre, avec 200 parties du bitume pur de départ en réalisant l'opération de mélange sous agitation à 185°C pendant 90 minutes.

On donne dans le tableau IV les valeurs de pénétrabilité et de TBA ainsi que les caractéristiques en traction du liant bitume/polymère (produit IX.b) obtenu.

**TABLEAU IV**

| Produit | Pénétrabilité (1/10 mm) | | Traction à 5° C et 500 mm/min | | |
|---|---|---|---|---|---|
| | | TBA (°C) | σs (bars) | σr (bars) | εr (%) |
| IX.b | 70 | 57,5 | 19,93 | 7,67 | > 900 |

### EXEMPLE 10 :

### Préparation d'une composition bitume/polymère selon l'invention en utilisant un adiuvant du type acide sulfonique

On opérait comme décrit dans l'exemple 9 en remplaçant toutefois l'adjuvant par la même quantité d'un acide xylène sulfonique portant sur le noyau un radical alkyle gras linéaire en C₁₆ à C₁₈, ledit acide ayant une masse molaire de 430.

On obtenait une composition bitume/polymère non gélifiée (produit X.a) renfermant environ 9 % de copolymère styrène/butadiène.

On donne dans le tableau V les valeurs de pénétrabilité et de TBA de la composition ainsi obtenue, mesurées pendant un stockage de ladite composition à haute température (environ 163°C) pendant plusieurs jours.

**TABLEAU V**

| Produit | Durée de stockage (heures) | Pénétrabilité (1/10 mm) | TBA (°C) |
|---|---|---|---|
| | 0 | 61 | 90,6 |
| | 48 | 60 | 91 |
| X.a | 72 | 60 | 94 |
| | 120 | 58 | 96 |
| | 240 | 55 | 98 |

### EXEMPLE 11

### Préparation d'une composition bitume/polymère selon l'invention en utilisant un adjuvant de type acide alkylphosphorique

En opérant à 185°C sous agitation, on incorporait 16 parties d'un mélange équimoléculaire d'acides mono- et bis (éthyl-2hexyl) phosphoriques, préparé par réaction d'éthyl-2 hexanol et d'anhydride phosphorique dans un rapport molaire de 3:1, à 1000 parties d'un bitume identique au bitume utilisé dans l'exemple 1 et maintenait l'ensemble à la température de 185°C pendant 20 minutes.

En opérant toujours à la même température et sous agitation, on incorporait ensuite au mélange de bitume et d'adjuvant phosphorique, 88 parties d'un copolymère diséquencé de styrène et de butadiène identique à celui utilisé dans l'exemple 1. Après 5 heures de mélange sous agitation, on obtenait une masse homogène.

A ladite masse homogène, maintenue à 185°C, on ajoutait alors 2,3 parties de soufre cristallisé et on agitait encore l'ensemble pendant 60 minutes environ. On obtenait une composition bitume/polymère non gélifiée (produit XI.a) renfermant environ 8 % en poids de copolymère réticulé styrène/butadiène.

Dans le tableau VI ci-après, on donne les valeurs de pénétrabilité et de TBA de la composition ainsi obtenue, mesurées pendant un stockage de ladite composition à haute température, à savoir environ 160°C.

**TABLEAU VI**

| Produit | Durée de stockage à 163°C (heures) | Pénétrabilité (1/10 mm) | TBA (°C) |
|---|---|---|---|
| | 0 | 50 | 86 |
| | 48 | 51 | 88 |
| XI.a | 96 | 49 | 89 |
| | 144 | 49 | 89 |
| | 240 | 47 | 91 |

En effectuant la préparation d'une composition bitume/polymère témoin dans les conditions opératoires du présent exemple, mais en l'absence de l'adjuvant phosphorique, le milieu réactionnel gélifiait immédiatement après l'addition du soufre.

### EXEMPLE 12 :

### Préparation d'une composition bitume/polymère selon l'invention en utilisant un adjuvant du type acide alkylphosphorigue.

On opérait comme décrit dans l'exemple 9 en remplaçant toutefois l'adjuvant de l'exemple 9 par la même quantité d'un mélange équimoléculaire d'acides mono- et bis éthyl-phosphoriques.

On obtenait ainsi une composition bitume/polymère non gélifiée ayant une viscosité dynamique, à 140°C égale à 21 Poises et renfermant environ 9 % de copolymère réticulé diséquencé styrène/butadiène (produit XII.a).

Dans le tableau VII ci-après, on donne les valeurs de pénétrabilité et de TBA de ladite composition ainsi obtenue, mesurées pendant un stockage de cette composition à haute température, à savoir 163°C environ.

**TABLEAU VII**

| Produit | Durée de stockage à 163°C (heures) | Pénétrabilité (1/10 mm) | TBA (°C) |
|---|---|---|---|
| | 0 | 54 | 87 |
| | 48 | 52 | 87 |
| XII.a | 96 | 52 | 88 |
| | 240 | 51 | 88 |

## Revendications

1. Compositions bitume/polymère non gélifiables et stables au stockage à température élevée, du type consistant en une masse homogène formée d'une matrice bitumineuse constituée d'un bitume ou d'un mélange de bitumes et dans laquelle est distribué, de manière uniforme, un élastomère réticulé au soufre, en quantité comprise entre 3 et 30 % du poids de la matrice bitumineuse, et se caractérisant en ce qu'un adjuvant, jouant notamment le rôle d'antigélifiant, est également présent dans la matrice bitumineuse en quantité comprise entre 0,1 % et 5 % du poids de ladite matrice, lequel adjuvant consiste en un ou plusieurs composés de formule R-X, dans laquelle R est un radical organique monovalent en C₂ à C₅₀ et X désigne un groupement fonctionnel choisi parmi 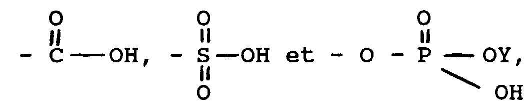 avec Y représentant un atome d'hydrogène ou un radical R.

2. Compositions selon la revendication 1, caractérisées en ce que l'adjuvant est présent dans la matrice bitumineuse en quantité comprise entre 0,2 % et 3 % du poids de ladite matrice.

3. Compositions selon la revendication 1 ou 2, caractérisées en ce que dans la formule R-X représentant l'adjuvant, le radical R est en C₂ à C₄₀.

4. Compositions selon l'une des revendications 1 à 3, caractérisées en ce que dans la formule R-X représentant l'adjuvant, le radical R est un radical monovalent hydrocarboné saturé ou insaturé.

5. Compositions selon la revendication 4, caractérisées en ce que ledit radical R est du type alkyle ou alkényle linéaire ou ramifié, alkylaryle, alkadiényle, alkatriényle ou encore polycyclique à cycles condensés.

6. Compositions selon la revendication 4 ou 5, caractérisées en ce que les composés de formule R-X sont du type acide carboxylique à chaîne grasse saturée ou insaturée, acide alkylarènesulfonique portant une ou deux chaînes grasses saturées ou insaturée sur le noyau arène, acide polycyclique à cycles condensés, acide abiétique et acides résiniques dérivés de l'acide abiétique, acide monoalkylphosphorique, acide dialkylphosphorique et mélanges d'acides carboxyliques à chaîne grasse et d'acides résiniques.

7. Compositions selon l'une des revendications 1 à 6, caractérisées en ce que l'élastomère réticulé au soufre représente entre 5 % et 25 % du poids de la matrice bitumineuse.

8. Compositions selon l'une des revendications 1 à 7, caractérisées en ce que le bitume ou le mélange de bitumes constituant la matrice bitumineuse sont choisis parmi les bitumes ayant une viscosité cinématique à 100°C comprise entre 0,5x10⁻⁴ m²/s et 3x10⁻² m²/s.

9. Compositions selon la revendication 8, caractérisées en ce que lesdits bitumes ont une viscosité cinématique comprise entre 1x10⁻⁴ m²/s et 2x10⁻² m²/s.

10. Compositions selon la revendication 8 ou 9, caractérisées en ce que le bitume ou mélange de bitumes constituant la matrice bitumineuse présente une pénétrabilité, définie suivant la norme NF T 66004, comprise entre 5 et 500.

11. Compositions selon la revendication 10, caractérisées en ce que ladite pénétrabilité est comprise entre 20 et 400.

12. Compositions selon l'une des revendications 1 à 11, caractérisées en ce que l'élastomère réticulé distribué dans la matrice bitumineuse est du type copolymère statistique ou séquencé réticulé de styrène et d'un diène conjugué.

13. Compositions selon la revendication 12, caractérisées en ce que ledit diène est choisi parmi butadiène, isoprène, chloroprène, butadiène carboxylé et isoprène carboxylé.

14. Compositions selon la revendication 12 ou 13, caractérisées en ce que le copolymère statistique ou séquencé réticulé de styrène et de diène conjugué a une teneur pondérale en styrène allant de 5 % à 50 %.

15. Procédé de préparation de compositions bitume/polymère non gélifiables et stables au stockage à température élevée, ledit procédé étant du type dans lequel on met en contact, en opérant à des températures comprises entre 100°C et 230°C et sous agitation pendant une durée d'au moins 10 minutes, un bitume ou mélange de bitumes avec, comptés en poids du bitume, entre 3 % et 30 % d'un élastomère réticulable au soufre et un agent de couplage donneur de soufre en quantité propre à fournir une quantité de soufre libre représentant 0,1 % à 20 % du poids du polymère réticulable au soufre dans le milieu réactionnel formé des ingrédients bitume, élastomère et agent de couplage, et il se caractérise en ce que , lors de ladite mise en contact, le milieu réactionnel renferme un adjuvant, jouant notamment le rôle d'antigélifiant, en quantité comprise entre 0,1 % et 5 % du poids du bitume, lequel adjuvant est constitué d'un ou plusieurs composés répondant à la formule R-X, dans laquelle R est un radical organique monovalent en C₂ à C₅₀ et X désigne un groupement fonctionnel choisi parmi 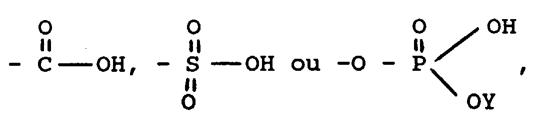 avec Y représentant un atome d'hydrogène ou un radical R.

16. Procédé selon la revendication 15, caractérisé en ce que l'adjuvant est présent dans le milieu réactionnel en quantité comprise entre 0,2 % et 3 % du poids du bitume.

17. Procédé selon la revendication 15 ou 16, caractérisé en ce que dans la formule R-X représentant l'adjuvant, le radical R est en C₂ à C₄₀.

18. Procédé selon l'une des revendications 15 à 17, caractérisé en ce que dans la formule R-X représentant l'adjuvant, le radical R est un radical monovalent hydrocarboné saturé ou insaturé.

19. Procédé selon la revendication 18, caractérisé en ce que ledit radical R est du type alkyle ou alkényle linéaire ou ramifié, alkylaryle, alkadiényle, alkatriényle, ou encore polycylique à cycles condensés.

20. Procédé selon la revendication 18 ou 19, caractérisé en ce que les composés de formule R-X sont du type acide carboxylique à chaîne grasse saturée ou insaturée, acide alkylarènesulfonique portant une ou deux chaînes grasses saturées ou insaturées sur le noyau, acide polycyclique à cycles condensés, acide abiétique et acides résiniques en dérivant, acide monoalkylphosphorique, acide dialkylphosphorique, et mélanges d'acides carboxyliques à chaîne grasse et d'acides résiniques.

21. Procédé selon l'une des revendications 15 à 20, caractérisé en ce que la quantité d'élastomère réticulable au soufre représente entre 5 % et 25 % en poids du bitume.

22. Procédé selon l'une des revendications 15 à 21, caractérisé en ce que le bitume ou mélange de bitumes présente une viscosité cinématique à 100°C comprise entre 0,5x10⁻⁴ m²/s et 3x10⁻² m²/s.

23. Procédé selon la revendication 22, caractérisé en ce que ladite viscosité cinématique est comprise entre 1x10⁻⁴ m²/s et 2x10⁻² m²/s.

24. Procédé selon la revendication 22 ou 23, caractérisé en ce que le bitume ou mélange de bitumes présente une pénétrabilité, définie suivant la norme NF T 66004, comprise entre 5 et 500.

25. Procédé selon la revendication 24, caractérisé en ce que ladite pénétrabilité est comprise entre 20 et 400.

26. Procédé selon l'une des revendications 15 à 25, caractérisé en ce que l'élastomère réticulable au soufre est du type copolymère statistique ou séquencé de styrène et d'un diène conjugué.

27. Procédé selon la revendication 26, caractérisé en ce que ledit diène est choisi parmi butadiène, isoprène, chloroprène, butadiène carboxylé et isoprène carboxylé.

28. Procédé selon la revendication 26 ou 27, caractérisé en ce que le copolymère de styrène et de diène conjugué renferme 5 % à 50 % en poids de styrène.

29. Procédé selon l'une des revendications 26 à 28, caractérisé en ce que la masse moléculaire viscosimétrique moyenne du copolymère de styrène et de diène conjugué est comprise entre 10 000 et 600 000.

30. Procédé selon la revendication 29, caractérisé en ce que ladite mase moléculaire est comprise entre 30 000 et 400 000.

31. Procédé selon l'une des revendications 15 à 30, caractérisé en ce que l'agent de couplage donneur de soufre est choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

32. Procédé selon l'une des revendications 15 à 31, caractérisé en ce que l'agent de couplage donneur de soufre est utilisé en quantité propre à fournir une quantité de soufre libre représentant 0, 5 % à 10 % du poids du polymère réticulable au soufre.

33. Procédé selon l'une des revendications 15 à 32, caractérisé en ce que l'on met tout d'abord en contact l'élastomère réticulable au soufre et l'adjuvant avec le bitume ou mélange de bitumes en opérant à des températures comprises entre 100°C et 230°C, et sous agitation, pendant un durée de 1 heure à 8 heures, pour former un mélange homogène, puis l'on incorpore audit mélange l'agent de couplage donneur de soufre et l'on maintient le tout sous agitation à des températures comprises entre 100°C et 230°C, et identiques ou non aux températures de mélange de l'élastomère et de l'adjuvant avec le bitume, pendant une durée allant de 10 minutes à 5 heures pour former la composition bitume/polymère.

34. Procédé selon la revendication 33, caractérisé en ce que l'adjuvant est incorporé au bitume ou mélange de bitumes avant l'élastomère.

35. Application des compositions bitume/polymère selon l'une des revendications 1 à 14 ou résultant du procédé selon l'une des revendications 15 à 34, à la production de liants bitume/polymère, lesdits liants consistant en lesdites compositions utilisées telles quelles ou bien étant formés par dilution desdites compositions par un bitume ou mélange de bitumes, lesquels liants bitume/polymère sont notamment utilisables, directement ou après mise en émulsion aqueuse, à la réalisation de revêtements routiers du type enduits superficiels, à la production d'enrobés mis en place à chaud ou à froid, ou encore à la réalisation de revêtements d'étanchéité.

## Patentansprüche

1. Gelbildungsbeständige und bei erhöhter Temperatur lagerungsbeständige Bitumen-Polymer-Zusammensetzungen, die aus einer homogenen Masse bestehen, die ihrerseits aus einer bituminösen Matrix gebildet ist, die aus einem Bitumen oder einem Bitumengemisch zusammengesetzt ist, in der in einer Menge von 3 bis 30 %, bezogen auf das Gewicht der bituminösen Matrix, ein mit Schwefel vernetztes Elastomer gleichmäßig verteilt ist, dadurch **gekennzeichnet,** daß in der bituminösen Matrix in einer Menge von 0,1 bis 5 %, bezogen auf das Gewicht der Matrix, außerdem ein die Gelbildung verhindernder Zusatz enthalten ist, der aus einer oder mehreren Verbindungen der Formel R-X besteht, worin R einen einwertigen organischen C₂₋₅₀-Rest und X eine funktionelle Gruppe, ausgewählt unter 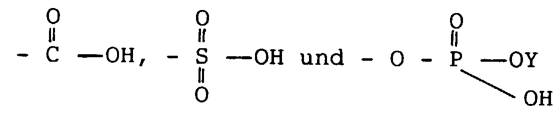 bedeuten, wobei Y für ein Wasserstoffatom oder einen Rest R steht.

2. Zusammensetzungen nach Anspruch 1, dadurch **gekennzeichnet,** daß der Zusatz in der bituminösen Matrix in einer Menge von 0,2 bis 3 %, bezogen auf das Gewicht der Matrix, vorliegt.

3. Zusammensetzungen nach Anspruch 1 oder 2, dadurch **gekennzeichnet,** daß in der Formel R-X für den Zusatz der Rest R ein C₂₋₄₀-Rest ist.

4. Zusammensetzungen nach einem der Ansprüche 1 bis 3, dadurch **gekennzeichnet,** daß in der Formel R-X für den Zusatz der Rest R ein einwertiger gesättigter oder ungesättigter Kohlenwasserstoffrest ist.

5. Zusammensetzungen nach Anspruch 4, dadurch **gekennzeichnet,** daß der Rest R ein unverzweigter oder verzweigter Alkyl- oder Alkenylrest, ein Alkylaryl-, Alkadienyl-, Alkatrienylrest oder ein kondensierte Ringe aufweisender polycyclischer Rest ist.

6. Zusammensetzungen nach Anspruch 4 oder 5, dadurch **gekennzeichnet,** daß die Verbindungen der Formel R-X Carbonsäuren mit gesättigter oder ungesättigter Fettsäurekette, Alkylarensulfonsäuren mit einer oder zwei gesättigten oder ungesättigten Fettsäureketten am Arenkern, polycyclische kondensierte Ringe aufweisende Säuren, Abietinsäure und von Abietinsäure abgeleitete Harzsäuren, Monoalkylphosphorsäuren, Dialkylphosphorsäuren und Gemische von Carbonsäuren mit Fettsäurekette und Harzsäuren darstellen.

7. Zusammensetzungen nach einem der Ansprüche 1 bis 6, dadurch **gekennzeichnet,** daß das mit Schwefel vernetzte Elastomer zwischen 5 und 25 %, bezogen auf das Gewicht der bituminösen Matrix, ausmacht.

8. Zusammensetzungen nach einem der Ansprüche 1 bis 7, dadurch **gekennzeichnet,** daß das die bituminöse Matrix bildende Bitumen oder Bitumengemisch unter Bitumina mit einer kinematischen Viskosität bei 100°C zwischen 0,5 x 10⁻⁴ m²/s und 3 x 10⁻² m²/s ausgewählt wird.

9. Zusammensetzungen nach Anspruch 8, dadurch **gekennzeichnet,** daß die Bitumina eine kinematische Viskosität zwischen 1 x 10⁻⁴ m²/s und 2 x 10⁻² m²/s aufweisen.

10. Zusammensetzungen nach Anspruch 8 oder 9, dadurch **gekennzeichnet,** daß das die bituminöse Matrix bildende Bitumen oder Bitumengemisch eine Penetrationszahl, definiert entsprechend der Norm NF T 66004, von 5 bis 500 aufweist.

11. Zusammensetzungen nach Anspruch 10, dadurch **gekennzeichnet,** daß die Penetrationszahl zwischen 20 und 400 liegt.

12. Zusammensetzungen nach einem der Ansprüche 1 bis 11, dadurch **gekennzeichnet,** daß das in der bituminösen Matrix verteilte vernetzte Elastomer ein vernetztes statistisches Copolymer oder Blockcopolymer aus Styrol und einem konjugierten Dien ist.

13. Zusammensetzungen nach Anspruch 12, daduch **gekennzeichnet,** daß das Dien ausgewählt ist unter Butadien, Isopren, Chloropren, carboxyliertem Butadien und carboxyliertem Isopren.

14. Zusammensetzungen nach Anspruch 12 oder 13, dadurch **gekennzeichnet,** daß das vernetzte statistische Copolymer oder Blockcopolymer aus Styrol und dem konjugierten Dien einen Gewichtsanteil an Styrol von 5 bis 50 % aufweist.

15. Verfahren zur Herstellung von gelbildungsbeständigen und bei erhöhter Temperatur lagerungsbeständigen Bitumen-Polymer-Zusammensetzungen, bei dem man bei Temperaturen zwischen 100 und 230°C und unter Rühren während einer Zeitdauer von mindestens 10 Minuten ein Bitumen oder ein Bitumengemisch mit, bezogen auf das Gewicht des Bitumens, 3 bis 30 % eines mit Schwefel vernetzbaren Elastomers und einem schwefelspendenden Kupplungsmittel in einer Menge, die geeignet ist, eine Menge an freiem Schwefel von 0,1 bis 20 %, bezogen auf das Gewicht des mit Schwefel vernetzbaren Polymers, zu liefern, in dem aus den Komponenten Bitumen, Elastomer und Kupplungsmittel gebildeten Reaktionsmedium in Berührung bringt, dadurch **gekennzeichnet,** daß das Reaktionsmedium während der Kontaktierung in einer Menge von 0,1 bis 5 %, bezogen auf das Gewicht des Bitumens, eines die Gelbildung verhindernden Zusatzes enthält, der aus einer oder mehreren Verbindungen der Formel R-X besteht, worin R einen einwertigen organischem C₂₋₅₀-Rest und X eine funktionelle Gruppe, ausgewählt unter 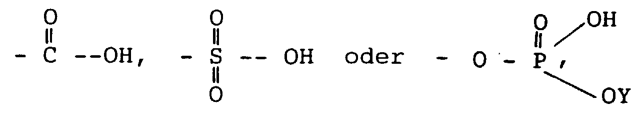 bedeuten, wobei Y für ein Wasserstoffatom oder einen Rest R steht.

16. Verfahren nach Anspruch 15, dadurch **gekennzeichnet,** daß der Zusatz im Reaktionsmedium in einer Menge von 0,2 bis 3 %, bezogen auf das Gewicht des Bitumens, vorliegt.

17. Verfahren nach Anspruch 15 oder 16, dadurch **gekennzeichnet,** daß in der Formel R-X für den Zusatz der Rest R ein C₂₋₄₀-Rest ist.

18. Verfahren nach einem der Ansprüche 15 bis 17, dadurch **gekennzeichnet,** daß in der Formel R-X für den Zusatz der Rest R ein einwertiger gesättigter oder ungesättigter Kohlenwasserstoffrest ist.

19. Verfahren nach Anspruch 18, dadurch **gekennzeichnet,** daß der Rest R ein unverzweigter oder verzweigter Alkyl- oder Alkenylrest, ein Alkylaryl-, Alkadienyl-, Alkatrienylrest oder ein kondensierte Ringe aufweisender polycyclischer Rest ist.

20. Verfahren nach Anspruch 18 oder 19, dadurch **gekennzeichnet,** daß die Verbindungen der Formel R-X Carbonsäuren mit gesättigter oder ungesättigter Fettsäurekette, Alkylarensulfonsäuren mit einer oder zwei gesättigten oder ungesättigten Fettsäureketten am Kern, polycyclische kondensierte Ringe aufweisende Säuren, Abietinsäure und von Abietinsäure abgeleitete Harzsäuren, Monoalkylphosphorsäuren, Dialkylphosphorsäuren und Gemische von Carbonsäuren mit gesättigter oder ungesättigter Fettsäurekette und Harzsäuren darstellen.

21. Verfahren nach einem der Ansprüche 15 bis 20, dadurch **gekennzeichnet,** daß die Menge des mit Schwefel vernetzbarenElastomers zwischen 5 und 25 %, bezogen auf das Gewicht des Bitumens, ausmacht.

22. Verfahren nach einem der Ansprüche 15 bis 21, dadurch **gekennzeichnet,** daß das Bitumen oder das Bitumengemisch eine kinematische Viskosität bei 100°C zwischen 0,5 x 10⁻⁴ m²/s und 3 x 10⁻² m²/s aufweist.

23. Verfahren nach Anspruch 22, dadurch **gekennzeichnet,** daß die kinematische Viskosität zwischen 1 x 10⁻⁴ m²/s und 2 x 10⁻² m²/s liegt.

24. Verfahren nach Anspruch 22 oder 23, dadurch **gekennzeichnet,** daß das Bitumen oder das Bitumengemisch eine Penetrationszahl, definiert entsprechend der Norm NF T 66004, von 5 bis 500 aufweist.

25. Verfahren nach Anspruch 24, dadurch **gekennzeichnet,** daß die Penetrationszahl zwischen 20 und 400 liegt.

26. Verfahren nach einem der Ansprüche 15 bis 25, dadurch **gekennzeichnet,** daß das mit Schwefel vernetzbare Elastomer ein statistisches Copolymer oder ein Blockcopolymer aus Styrol und einem konjugierten Dien ist.

27. Verfahren nach Anspruch 26, dadurch **gekennzeichnet,** daß das Dien ausgewählt wird unter Butadien, Isopren, Chloropren, carboxyliertem Butadien und carboxyliertem Isopren.

28. Verfahren nach Anspruch 26 oder 27, dadurch **gekennzeichnet,** daß das Copolymer aus Styrol und konjugiertem Dien 5 bis 50 Gew.-% Styrol enthält.

29. Verfahren nach einem der Ansprüche 26 bis 28, dadurch **gekennzeichnet,** daß die durchschnittliche viskosimetrische Molekularmasse des Copolymers aus Styrol und konjugiertem Dien 10.000 bis 600.000 beträgt.

30. Verfahren nach Anspruch 29, dadurch **gekennzeichnet,** daß die Molekularmasse 30.000 bis 400.000 beträgt.

31. Verfahren nach einem der Ansprüche 15 bis 30, dadurch **gekennzeichnet,** daß das schwefelspendende Kupplungsmittel ausgewählt wird aus der Gruppe, bestehend aus elementarem Schwefel, Kohlenwasserstoffpolysulfiden, schwefelspendenden Vulkanisationsbeschleunigern, Gemischen dieser Produkte untereinander und/oder mit nichtschwefelspendenden Vulkanisationsbeschleunigern.

32. Verfahren nach einem der Ansprüche 15 bis 31, dadurch **gekennzeichnet,** daß das schwefelspendende Kupplungsmittel in einer Menge verwendet wird, die geeignet ist, eine Menge an freiem Schwefel von 0,5 bis 10%, bezogen auf das Gewicht des mit Schwefel vernetzbaren Polymers, zu liefern.

33. Verfahren nach einem der Ansprüche 15 bis 32, dadurch **gekennzeichnet,** daß man zuerst das mit Schwefel vernetzbare Elastomer und den Zusatz mit dem Bitumen oder dem Bitumengemisch bei Temperaturen zwischen 100°C und 230°C unter Rühren während einer Zeitdauer von 1 Stunde bis 8 Stunden zur Bildung eines homogenen Gemisches in Berührung bringt, in das Gemisch das schwefelspendende Kupplungsmittel einarbeitet und das Ganze unter Rühren bei Temperaturen zwischen 100 und 230°C, die gegebenenfalls mit den Temperaturen für das Mischen des Elastomers und des Zusatzes mit dem Bitumen zusammenfallen, während einer Zeitdauer von 10 Minuten bis 5 Stunden hält, um die Bitumen-Polymer-Zusammensetzung zu bilden.

34. Verfahren nach Anspruch 33, dadurch **gekennzeichnet,** daß der Zusatz in das Bitumen oder Bitumengemisch vor dem Elastomer eingearbeitet wird.

35. Verwendung der Bitumen-Polymer-Zusammensetzungen nach einem der Ansprüche 1 bis 14 bzw. der Zusammensetzungen, wie sie nach dem Verfahren gemäß einem der Ansprüche 15 bis 34 erhalten werden, zur Herstellung von Bitumen-Polymer-Bindemitteln, die aus diesen Zusammensetzungen bestehen, die als solche oder nach ihrer Verdünnung mit einem Bitumen oder Bitumengemisch verwendet werden, und diese Bitumen-Polymer-Bindemittel, insbesondere unmittelbar als solche oder nach Emulgieren in Wasser zur Herstellung von Straßenbelägen in Form von Oberflächenbeschichtungen, zur Herstellung von warm oder kalt aufgebrachten Straßendecken oder zur Herstellung von Dichtungsschürzen verwendet werden können.

## Claims

1. Non-gelling bitumen/polymer compositions which are storage-stable at high temperature, of the type comprising a homogeneous mass formed by a bituminous matrix composed of a bitumen or of a mixture of bitumens and in which an elastomer cross-linked with sulphur is uniformly distributed in an amount of between 3 and 30 % of the weight of the bituminous matrix, and being characterised in that an adjuvant acting especially as an anti-gelling agent is also present in the bituminous matrix in an amount of between 0.1 % and 5 % of the weight of the matrix, which adjuvant comprises one or more compounds of the formula R-X, in which R is a C₂ to C₅₀ monovalent organic radical and X denotes a functional grouping selected from 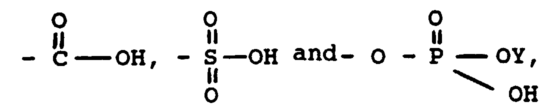 wherein Y represents a hydrogen atom or a radical R.

2. Compositions according to Claim 1, characterised in that the adjuvant is present in the bituminous matrix in an amount of between 0.2 % and 3 % of the weight of the matrix.

3. Compositions according to Claim 1 or 2, characterised in that, in the formula R-X representing the adjuvant, the radical R contains from 2 to 40 carbon atoms.

4. Compositions according to any one of Claims 1 to 3, characterised in that, in the formula R-X representing the adjuvant, the radical R is a saturated or unsaturated monovalent hydrocarbon radical.

5. Compositions according to Claim 4, characterised in that the radical R is of the linear or branched alkyl or alkenyl type, of the alkylaryl, alkadienyl or alkatrienyl type, or of the polycyclic type having fused rings.

6. Compositions according to Claim 4 or 5, characterised in that the compounds of the formula R-X are of the type carboxylic acid having a saturated or unsaturated fatty chain, alkylarenesulphonic acid carrying one or two saturated or unsaturated fatty chains on the arene ring, polycyclic acid having fused rings, abietic acid and resinous acids derived from abietic acid, monoalkylphosphoric acid, dialkylphosphoric acid and mixtures of carboxylic acids having a fatty chain and resinous acids.

7. Compositions according to any one of Claims 1 to 6, characterised in that the elastomer cross-linked with sulphur represents between 5 % and 25 % of the weight of the bituminous matrix.

8. Compositions according to any one of Claims 1 to 7, characterised in that the bitumen or the mixture of bitumens constituting the bituminous matrix is selected from bitumens having a kinematic viscosity at 100°C of between 0.5x10⁻⁴ m²/s and 3x10⁻² m²/s.

9. Compositions according to Claim 8, characterised in that the bitumens have a kinematic viscosity of between 1x10⁻⁴ m²/s and 2x10⁻² m²/s.

10. Compositions according to Claim 8 or 9, characterised in that the bitumen or mixture of bitumens constituting the bituminous matrix has a penetrability, defined in accordance with standard NF T 66004, of between 5 and 500.

11. Compositions according to Claim 10, characterised in that the penetrability is between 20 and 400.

12. Compositions according to any one of Claims 1 to 11, characterised in that the cross-linked elastomer distributed in the bituminous matrix is of the type of the crosslinked random or block copolymer of styrene and a conjugated diene.

13. Compositions according to Claim 12, characterised in that the diene is selected from butadiene, isoprene, chloroprene, carboxylated butadiene and carboxylated isoprene.

14. Compositions according to Claim 12 or 13, characterised in that the crosslinked random or block copolymer of styrene and conjugated diene has a content by weight of styrene of from 5 % to 50 %.

15. Process for the preparation of non-gelling bitumen/polymer compositions which are storage-stable at high temperature, the process being of the type in which, while operating at temperatures of between 100°C and 230°C and with agitation for a period of at least 10 minutes, a bitumen or mixture of bitumens is brought into contact with, based on the weight of the bitumen, between 3 % and 30 % of an elastomer crosslinkable with sulphur and a coupling agent which yields sulphur in an amount capable of providing an amount of free sulphur representing from 0.1 % to 20 % of the weight of the polymer crosslinkable with sulphur in the reaction medium formed by the ingredients bitumen, elastomer and coupling agent, and it is characterised in that, during said operation of bringing into contact, the reaction medium contains an adjuvant, acting especially as an anti-gelling agent, in an amount of between 0.1 % and 5 % of the weight of the bitumen, which adjuvant is formed by one or more compounds corresponding to the formula R-X in which R is a C₂ to C₅₀ monovalent organic radical and X denotes a functional grouping selected from 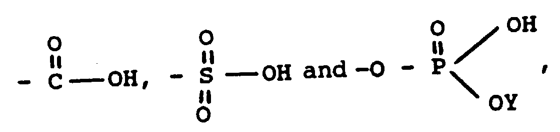 wherein Y represents a hydrogen atom or a radical R.

16. Process according to Claim 15, characterised in that the adjuvant is present in the reaction medium in an amount of between 0.2 % and 3 % of the weight of the bitumen.

17. Process according to Claim 15 or 16, characterised in that, in the formula R-X representing the adjuvant, the radical R has from 2 to 40 carbon atoms.

18. Process according to any one of Claims 15 to 17, characterised in that, in the formula R-X representing the adjuvant, the radical R is a saturated or unsaturated monovalent hydrocarbon radical.

19. Process according to Claim 18, characterised in that the radical R is of the linear or branched alkyl or alkenyl type, of the alkylaryl, alkadienyl or alkatrienyl type, or of the polycyclic type having fused rings.

20. Process according to Claim 18 or 19, characterised in that the compounds of the formula R-X are of the type carboxylic acid having a saturated or unsaturated fatty chain, alkylarenesulphonic acid carrying one or two saturated or unsaturated fatty chains on the ring, polycyclic acid having fused rings, abietic acid and resinous acids derived therefrom, monoalkylphosphoric acid, dialkylphosphoric acid, and mixtures of carboxylic acids having a fatty chain and resinous acids.

21. Process according to any one of Claims 15 to 20, characterised in that the amount of elastomer cross-linkable with sulphur represents between 5 % and 25 % by weight of the bitumen.

22. Process according to any one of Claims 15 to 21, characterised in that the bitumen or mixture of bitumens has a kinematic viscosity at 100°C of between 0.5x10⁻⁴ m²/s and 3x10⁻² m²/s.

23. Process according to Claim 22, characterised in that the kinematic viscosity is between 1x10⁻⁴ m²/s and 2x10⁻² m²/s.

24. Process according to Claim 22 or 23, characterised in that the bitumen or mixture of bitumens has a penetrability, defined in accordance with the standard NF T 66004, of between 5 and 500.

25. Process according to Claim 24, characterised in that the penetrability is between 20 and 400.

26. Process according to any one of Claims 15 to 25, characterised in that the elastomer crosslinkable with sulphur is of the type of the random or block copolymer of styrene and a conjugated diene.

27. Process according to Claim 26, characterised in that the diene is selected from butadiene, isoprene, chloroprene, carboxylated butadiene and carboxylated isoprene.

28. Process according to Claim 26 or 27, characterised in that the copolymer of styrene and conjugated diene contains from 5 % to 50 % by weight of styrene.

29. Process according to any one of Claims 26 to 28, characterised in that the average viscosimetric molecular mass of the copolymer of styrene and conjugated diene is between 10 000 and 600 000.

30. Process according to Claim 29, characterised in that the molecular mass is between 30 000 and 400 000.

31. Process according to any one of Claims 15 to 30, characterised in that the coupling agent yielding sulphur is selected from the group formed by elemental sulphur, hydrocarbyl polysulphides, sulphur-yielding vulcanisation accelerators, mixtures of such products with one another and/or with non-sulphur-yielding vulcanisation accelerators.

32. Process according to any one of Claims 15 to 31, characterised in that the coupling agent yielding sulphur is used in an amount capable of providing an amount of free sulphur representing from 0.5 % to 10 % of the weight of the polymer crosslinkable with sulphur.

33. Process according to any one of Claims 15 to 32, characterised in that first of all the elastomer crosslinkable with sulphur and the adjuvant are brought into contact with the bitumen or mixture of bitumens while operating at temperatures of between 100°C and 230°C, and with agitation, for a period of from 1 hour to 8 hours, to form a homogeneous mixture, then the sulphur-yielding coupling agent is incorporated in the mixture and the whole is maintained under agitation at temperatures of between 100°C and 230°C, which may or may not be identical with the temperatures used for mixing the elastomer and the adjuvant with the bitumen, for a period of from 10 minutes to 5 hours to form the bitumen/polymer composition.

34. Process according to Claim 33, characterised in that the adjuvant is incorporated in the bitumen or mixture of bitumens before the elastomer.

35. Application of the bitumen/polymer compositions according to any one of Claims 1 to 14 or resulting from the process according to any one of Claims 15 to 34, to the production of bitumen/polymer binders, the binders comprising the compositions used as such or being formed by dilution of the compositions with a bitumen or mixture of bitumens, which bitumen/polymer binders can especially be used, directly or after being brought into an aqueous emulsion, in the production of road coverings of the surface coating type, in the production of mixes applied in the hot or cold state, or in the production of sealing coverings.
